# EUROPEAN PATENT APPLICATION

(11) **EP 2 091 294 A1**
(43) Date of publication of application: **19.08.2009**
(21) Application number: 08783809.0
(22) Date of filing: 30.07.2008
(51) Int. Cl.: H04W 84/00

(54) **A METHOD AND DEVICE OF SERVICE GUIDE OBTAINING.**

(30) Priority: 18.09.2007 CN 200710153969; 08.07.2008 CN 200810133058
(71) Applicant: Huawei Technologies Co., Ltd., Longgang District, Shenzhen Guangdong 518129 (CN)
(72) Inventor: JIANG, Feihu, Shenzhen Guangdong 518129 (CN); SHI, Teng, Shenzhen Guangdong 518129 (CN); ZHANG, Yuanyuan, Shenzhen Guangdong 518129 (CN); YUE, Peiyu, Shenzhen Guangdong 518129 (CN); ZHANG, Jie, Shenzhen Guangdong 518129 (CN)
(74) Representative: Körber, Martin Hans
(86) International application number: PCT/CN2008/071816
(87) International publication number: WO 2009/036675

(57) **Abstract**

A method and apparatus for acquiring service guides (SGs) are provided. The method includes: sending an SG request that carries information about a current area; and receiving an SG corresponding to the current area. In the embodiments of the present invention, the SG corresponding to the current area of the mobile terminal is differentiated in the SG server, and the SG request sent by the mobile terminal to the SG server carries the information about the current area where the mobile terminal resides. Therefore, the mobile terminal may directly receive the SG delivered by the SG server and corresponding to the current area, thus saving network transmission bandwidth massively. Moreover, the mobile terminal does not need to filter the SG fragments. Thus the mobile terminal is simplified, and the service is easier to promote and apply.

## Description

### CROSS-REFFERENCE TO RELATED APPLICATIONS

This application is a continuation of International Application No. PCT/CN2008/071816, filed on July 30, 2008, which claims the benefit of Chinese Patent Application No. 200710153969.2, filed on September 18, 2007, both of which are hereby incorporated by reference in its entireties.

### Field of the Invention

The present invention relates to mobile communications, and in particular, to a method and apparatus for acquiring service guides.

### Background of the Invention

It is a trend that digital television is integrated with mobile communication technologies and applications, and especially the mobile video service, namely, the mobile television service. The mobile video service is a new mobile service that transmits video contents to a mobile user through a mobile network and a mobile terminal. Currently, the mobile video service types include: mobile video message, mobile video game, mobile video conference, and mobile video surveillance. The bearer networks of mobile video services may include: mobile communication network, terrestrial broadcast television network, and satellite broadcast communication network.

Among the mobile video services, service navigation is implemented through a Service Guide (SG). An SG provides direct user interfaces and access guides for the user to access different mobile video services. Through the SG, the user may access data of various services, browse video channels, Electronic Program Guides (EPGs), and a price list, choose and purchase contents in the price list, and log in to a website to browse web pages. For Service Providers (SPs) and mobile operators, the SG can also provide an interactive interface for interacting with the user of the mobile terminal. Each television channel or audio channel may be correlated with the interactive services such as a download service over the Internet. In this way, the user may access the Internet services through a mobile packet network, and the SG may also schedule the programs specific to each different network. In the prior art, every mobile terminal in the coverage area of the network may acquire the SG of the area.

In the process of research and practice of the prior art, the inventor finds the following defects in the prior art: After receiving all SG fragments broadcast and delivered by the SG server, the mobile terminal acquires the SG fragment corresponding to the local coverage area only after filtering all the SG fragments, thus occupying a lot of network bandwidth; moreover, the SG filtering is extra processing that needs to be performed by the mobile terminal, and imposes high requirements on the mobile terminal, thus making it inconvenient to promote and apply the service.

### Summary of the Invention

The embodiments of the present invention provide a method and apparatus for acquiring SGs to save network transmission bandwidth and simplify the mobile terminal.

A method for acquiring SGs is provided in an embodiment of the present invention. The method includes:

sending an SG request that carries information about an area where a mobile terminal currently resides; and

receiving an SG corresponding to the current area of the mobile terminal.

Another method for acquiring SGs is provided in an embodiment of the present invention. The method includes:

acquiring an address of an SG corresponding to a current area according to information about the current area of a mobile terminal; and

receiving the SG according to the address of the SG.

Another method for acquiring SGs is provided in an embodiment of the present invention. The method includes:

receiving an SG that is integrated according to a coverage area, wherein the SG comprises coverage area information fragments pointing to a relevant service/content information element; and

acquiring the corresponding SG according to information about a current area and the coverage area information fragments.

Another method for acquiring SGs is provided in an embodiment of the present invention. The method includes:

determining that a current area is not covered by a coverage area of an SG according to information about the current area and coverage area information of an acquired SG; and

reacquiring the SG of the current area.

An SG server is provided in an embodiment of the present invention. The SG server includes:

a first receiving module, adapted to receive an SG request that carries information about a current area of a mobile terminal;

a first searching module, adapted to: search out an SG that matches the information about the current area of the mobile terminal according to the information about the current area of the mobile terminal; and

a first sending module, adapted to send the SG.

A bootstrap server is provided in an embodiment of the present invention. The bootstrap server includes:

a third receiving module, adapted to receive an SG address request that carries information about a current area of the mobile terminal;

a second searching module, adapted to: search out an SG address that matches the information about the current area of the mobile terminal according to the information about the current area of the mobile terminal; and

a second sending module, adapted to send the SG address.

Another SG server is provided in an embodiment of the present invention. The SG server includes:

a first acquiring module, adapted to acquire an SG corresponding to each different area in a service scope; and

a first broadcasting module, adapted to broadcast the corresponding SG to each different area.

Another SG server is provided in an embodiment of the present invention. The SG server includes:

an organizing module, adapted to: integrate an SG according to a coverage area, wherein the SG comprises coverage area information fragments pointing to a relevant service/content information element; and

a second broadcasting module, adapted to broadcast the SG to each different area.

A mobile terminal is provided in an embodiment of the present invention. The mobile terminal includes:

a requesting module, adapted to send an SG request that carries information about a current area of a mobile terminal; and

a second receiving module, adapted to receive an SG corresponding to the current area of the mobile terminal.

Another mobile terminal is provided in an embodiment of the present invention. The mobile terminal includes:

an addressing module, adapted to acquire an address of an SG corresponding to a current area of a mobile terminal according to information about the current area of the mobile terminal; and

a fourth receiving module, adapted to receive the SG according to the address of the SG.

Another mobile terminal is provided in an embodiment of the present invention. The mobile terminal includes:

a fifth receiving module, adapted to receive a Service Guide, SG, which is integrated according to a coverage area, wherein the SG comprises coverage area information fragments pointing to a relevant service/content information element; and

a second acquiring module, adapted to acquire the corresponding SG according to information about a current area and the coverage area information fragments.

Another mobile terminal is provided in an embodiment of the present invention. The mobile terminal includes:

a third acquiring module, adapted to acquire information about a current area of a mobile terminal and coverage area information of an acquired SG;

a judging module, adapted to: judge whether the current area of the mobile terminal is covered by the coverage area of the SG according to the information about the current area of the mobile terminal and the coverage area information of the acquired SG; and

a fourth acquiring module, adapted to reacquire the SG of the current area of the mobile terminal if the judging module determines that the current area of the mobile terminal is not covered by the coverage area of the SG.

The foregoing technical solution shows that in the embodiments of the present invention, the mobile terminal sends an SG request that carries the information about the area where the mobile terminal currently resides, and then receives the SG delivered by the SG server and corresponding to the current area of the mobile terminal. The SG corresponding to the area of the mobile terminal is differentiated in the SG server, and the SG request sent by the mobile terminal to the SG server carries the information about the current area of the mobile terminal. Therefore, the mobile terminal may directly receive the SG delivered by the SG server and corresponding to the current area of the mobile terminal, thus saving network transmission bandwidth massively. Moreover, the mobile terminal does not need to filter the SG fragments. Thus the mobile terminal is simplified, and the service is easier to promote and apply.

The embodiments of the present invention are detailed below with reference to accompanying drawings.

### Brief Description of the Drawings

FIG. 1 is a flowchart illustrating a first embodiment of an SG acquiring method of the present invention;

FIG. 2 is a flowchart illustrating a second embodiment of an SG acquiring method of the present invention;

FIG. 3 is a flowchart illustrating a first embodiment of another SG acquiring method of the present invention;

FIG. 4 is a flowchart illustrating a second embodiment of another SG acquiring method of the present invention;

FIG. 5 is a flowchart illustrating an embodiment of another SG acquiring method of the present invention;

FIG. 6 is a flowchart illustrating an embodiment of an SG reacquiring method of the present invention;

FIG. 7 shows a structure of an SG server in an embodiment of the present invention;

FIG. 8 shows a structure of a terminal device in an embodiment of the present invention;

FIG. 9 shows a structure of a bootstrap server in an embodiment of the present invention;

FIG. 10 shows a structure of another SG server in an embodiment of the present invention;

FIG. 11 shows a structure of another terminal device in an embodiment of the present invention;

FIG. 12 shows a structure of another SG server in an embodiment of the present invention;

FIG. 13 shows a structure of another terminal device in an embodiment of the present invention; and

FIG. 14 shows a structure of another terminal device in an embodiment of the present invention.

### Detailed Description of the Invention

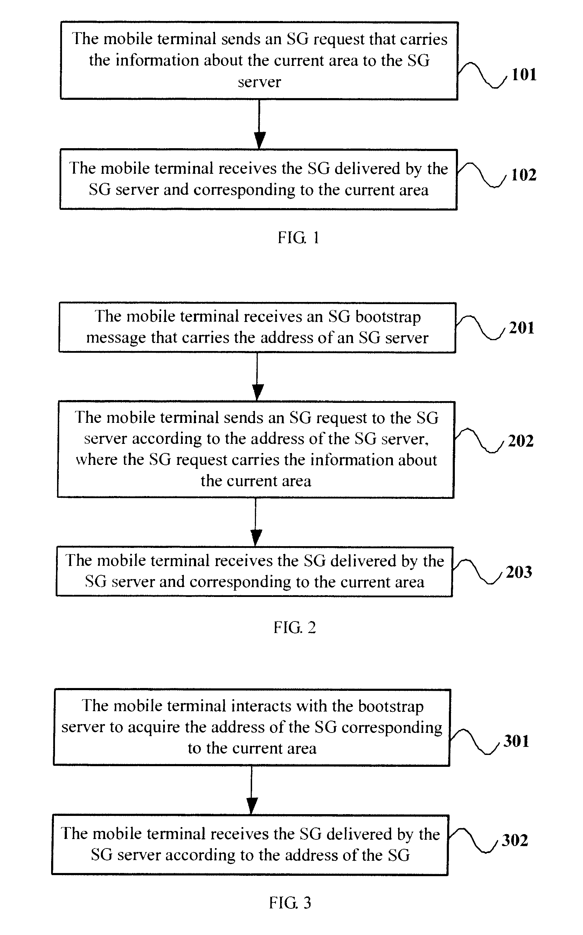

FIG. 1 is a flowchart illustrating a first embodiment of an SG acquiring method of the present invention. As shown in FIG. 1, the method includes the following steps:

Step 101: The mobile terminal sends an SG request to the SG server, where the SG request carries the information about the current area of the mobile terminal.

The information about the current area of the mobile terminal may be information about the interactive network, broadcast network, or Global Positioning System (GPS) where the mobile terminal currently resides.

It is understandable that the address of the SG server may be preset in the mobile terminal to facilitate the communication with the SG server.

Step 102: The mobile terminal receives the SG delivered by the SG server and corresponding to the current area of the mobile terminal.

In this embodiment, the SG server may store the correspondence between the SG and the coverage area of the SG, or interact with other network elements to acquire the correspondence. The SG server identifies the coverage area that covers the current area of the mobile terminal, and searches for the SG corresponding to the coverage area.

The SG server in this embodiment is capable of acquiring the correspondence between the SG and the coverage area of the SG, and the specific process in which the SG server acquires the correspondence does not constitute any limitation on the present invention.

In this embodiment, the mobile terminal sends an SG request that carries the information about the current area of the mobile terminal, and then receives the SG delivered by the SG server and corresponding to the current area of the mobile terminal. The SG corresponding to the current area of the mobile terminal is differentiated in the SG server. Therefore, after sending the SG request that carries the information about the current area of the mobile terminal to the SG server, the mobile terminal may directly receive the SG delivered by the SG server and corresponding to the current area of the mobile terminal, thus saving network transmission bandwidth massively. Moreover, the mobile terminal does not need to filter the SG fragments. Thus the mobile terminal is simplified, and the mobile video service is easier to promote and apply.

FIG. 2 is a flowchart illustrating a second embodiment of an SG acquiring method of the present invention. As shown in FIG. 2, the method includes the following steps:

Step 201: The mobile terminal receives an SG bootstrap message that carries the address of an SG server.

In this step, the mobile terminal may acquire the current network information first, and receive the bootstrap message broadcast by the bootstrap server through the current network. The current network may be a current broadcast network or interactive network. Specifically, the message may be acquired in two modes:

Mode 1:

The mobile terminal receives the SG bootstrap message broadcast by the bootstrap server through the broadcast network.

Mode 2:

The mobile terminal requests the SG bootstrap message from the bootstrap server through the interactive network.

The mobile terminal receives the SG bootstrap message sent by the bootstrap server.

It is understandable that the mobile terminal may also receive the SG bootstrap message in multiple modes available in the prior art, and such modes do not constitute any limitation on the present invention.

Step 202: The mobile terminal sends an SG request to the SG server according to the address of the SG server, where the SG request carries the information about the current area of the mobile terminal.

When the mobile terminal begins to access the network or performs handover between cells, the mobile terminal knows the current area of the mobile terminal according to the current network information. The information about the current area of the mobile terminal may be information about the interactive network, broadcast network, or GPS where the mobile terminal resides.

Step 203: The mobile terminal receives the SG delivered by the SG server and corresponding to the current area of the mobile terminal.

In this embodiment, the SG server may store the correspondence between the SG and the coverage area of the SG, or interact with other network elements to acquire the correspondence. The SG server identifies the coverage area that covers the current area of the mobile terminal, and searches for the SG corresponding to the coverage area.

The SG server in this embodiment is capable of acquiring the correspondence between the SG and the coverage area of the SG, and the specific process in which the SG server acquires the correspondence does not constitute any limitation on the present invention.

The process in which the mobile terminal acquires the SG in this embodiment may be triggered by change of the current area of the mobile terminal or change of the information about the current area of the mobile terminal, for example, when the mobile terminal is handed over from one cell to another; or triggered when the mobile terminal accesses the network after being powered on; or triggered when the user of the mobile terminal operates the mobile terminal to watch a video program. It is understandable that the process in which the mobile terminal acquires the SG may be triggered in many other modes, and the specific triggering mode does not constitute any limitation on the present invention.

The second embodiment of the SG acquiring method differs from the first embodiment in that: In the second embodiment, the SG bootstrap request delivered by the bootstrap server carries the address of the SG server, and the mobile terminal communicates with the SG server according to the address and acquires the SG corresponding to the current area of the mobile terminal.

FIG. 3 is a flowchart illustrating a first embodiment of another SG acquiring method of the present invention. As shown in FIG. 3, the method includes the following steps:

Step 301: The mobile terminal interacts with the bootstrap server to acquire the address of the SG corresponding to the current area of the mobile terminal.

The address of the SG may be a broadcast address or interactive address of the SG.

In this step, the mobile terminal may acquire the address of the SG corresponding to the current area of the mobile terminal in many modes, as exemplified below:

Mode 1:

The mobile terminal receives the SG bootstrap message broadcast by the bootstrap server through the broadcast network, where the SG bootstrap message carries the correspondence between the SG coverage area information and the SG address.

According to the information about the current area of the mobile terminal, the mobile terminal acquires the address of the SG that matches the information about the current area of the mobile terminal in the correspondence.

In this mode, the information about the area where the mobile terminal currently resides may be information about the interactive network, broadcast network, or GPS where the mobile terminal resides. The specific process in which the mobile terminal identifies the SG whose coverage area covers the current area of the mobile terminal and acquires the address of the SG corresponding to the coverage area does not constitute any limitation on the present invention.

Mode 2:

The mobile terminal requests the SG bootstrap message from the bootstrap server, where the request carries the information about the area where the mobile terminal currently resides.

The mobile terminal receives the SG bootstrap message delivered by the bootstrap server, where the SG bootstrap message carries the address of the SG corresponding to the current area of the mobile terminal.

It is understandable that the bootstrap server may store the coverage area of the SG and the corresponding SG address locally. After receiving the request from the mobile terminal, the bootstrap server searches for the coverage area that covers the current area of the mobile terminal, and acquires the address of the SG corresponding to the coverage area.

Mode 3:

The mobile terminal requests the SG bootstrap message from the bootstrap server.

The mobile terminal receives the SG bootstrap message delivered by the bootstrap server, where the SG bootstrap message carries the correspondence between the SG coverage area information and the SG address.

According to the information about the current area of the mobile terminal, the mobile terminal acquires the address of the SG that matches the information about the current area of the mobile terminal in the correspondence.

The specific process in which the mobile terminal identifies the SG whose coverage area covers the current area of the mobile terminal and acquires the address of the SG corresponding to the coverage area does not constitute any limitation on the present invention.

Step 302: According to the address of the SG, the mobile terminal receives the SG delivered by the SG server.

It is understandable that the mobile terminal may receive the SG in either of the following modes:

Mode 1: In the case that the address of the SG is the broadcast address of the SG

The SG server broadcasts the corresponding SG to different areas in the service scope.

According to the address of the SG, the mobile terminal receives the SG broadcast by the SG server.

Mode 1: In the case that the address of the SG is the interactive address of the SG

According to the address of the SG, the mobile terminal requests the SG from the SG server.

The mobile terminal receives the SG delivered by the SG server and corresponding to the address of the SG.

The process in which the mobile terminal acquires the SG in this embodiment may be triggered by change of the current area of the mobile terminal or change of the information about the current area of the mobile terminal, for example, when the mobile terminal is handed over from one cell to another; or triggered when the mobile terminal accesses the network after being powered on; or triggered when the user of the mobile terminal operates the mobile terminal to watch a video program. It is understandable that the process in which the mobile terminal acquires the SG may be triggered in many other modes, and the specific triggering mode does not constitute any limitation on the present invention.

In this embodiment, the SG server sends the SG corresponding to each different coverage area, and the mobile terminal acquires the address of the SG of the current area of the mobile terminal, and then receives the SG according to the address of the acquired SG. Compared with the prior art in which the SG server broadcasts and delivers the SGs of all coverage areas, the present invention saves the network transmission bandwidth massively. Moreover, the mobile terminal does not need to filter the SGs of all coverage areas before acquiring the SG of the current area of the mobile terminal. Therefore, the requirements on the mobile terminal are lowered, the mobile terminal is simplified, and the mobile video service is easier to promote and apply.

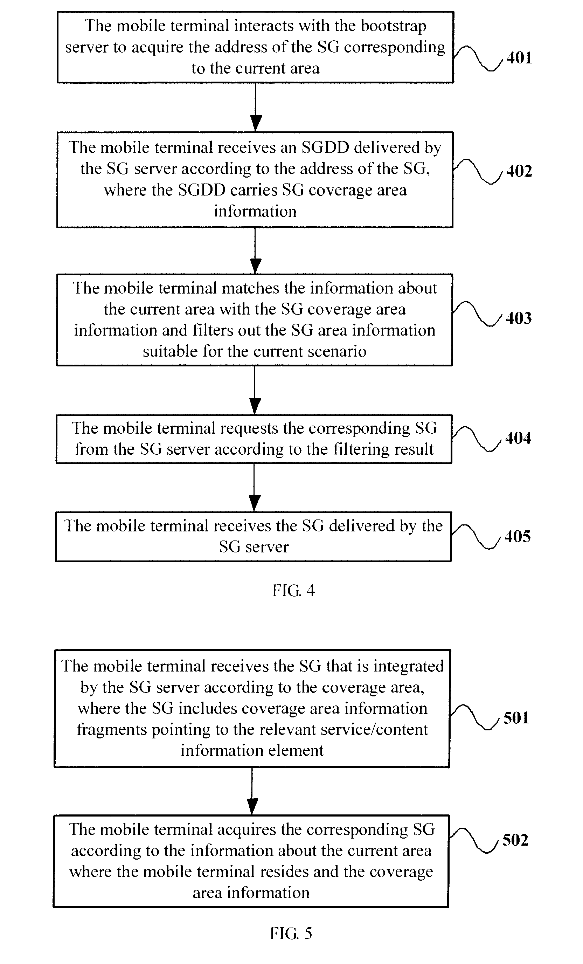

FIG. 4 is a flowchart illustrating a second embodiment of another SG acquiring method of the present invention. As shown in FIG. 4, the method includes the following steps:

Step 401: The mobile terminal interacts with the bootstrap server to acquire the address of the SG corresponding to the current area of the mobile terminal.

The address of the SG may be a broadcast address or interactive address of the SG.

In this step, the mobile terminal may acquire the address of the SG corresponding to the current area of the mobile terminal in many modes, as exemplified below:

Mode 1:

The mobile terminal receives the SG bootstrap message broadcast by the bootstrap server through the broadcast network, where the SG bootstrap message carries the correspondence between the SG coverage area information and the SG address.

According to the information about the area where the mobile terminal currently resides, the mobile terminal acquires the address of the SG that matches the information about the current area of the mobile terminal in the correspondence.

In this embodiment, the information about the area where the mobile terminal currently resides may be information about the interactive network, broadcast network, or GPS where the mobile terminal resides. The specific process in which the mobile terminal identifies the SG whose coverage area covers the current area of the mobile terminal and acquires the address of the SG corresponding to the coverage area does not constitute any limitation on the present invention.

Mode 2:

The mobile terminal requests the SG bootstrap message from the bootstrap server, where the request carries the information about the area where the mobile terminal currently resides.

The mobile terminal receives the SG bootstrap message delivered by the bootstrap server, where the SG bootstrap message carries the address of the SG corresponding to the current area of the mobile terminal.

It is understandable that the bootstrap server may store the coverage area of the SG and the corresponding SG address locally. After receiving the request from the mobile terminal, the bootstrap server searches for the coverage area that covers the current area of the mobile terminal, and acquires the address of the SG corresponding to the coverage area.

Mode 3:

The mobile terminal requests the SG bootstrap message from the bootstrap server.

The mobile terminal receives the SG bootstrap message delivered by the bootstrap server, where the SG bootstrap message carries the correspondence between the area information and the address of the SG.

According to the information about the area where the mobile terminal currently resides, the mobile terminal acquires the address of the SG that matches the information about the current area of the mobile terminal in the correspondence.

The specific process in which the mobile terminal identifies the SG whose coverage area covers the current area of the mobile terminal and acquires the address of the SG corresponding to the coverage area does not constitute any limitation on the present invention.

Step 402: According to the address of the SG, the mobile terminal receives the Service Guide Delivery Descriptor (SGDD) delivered by the SG server. The SGDD carries the SG coverage area information to describe the coverage area of the SG.

It is understandable that the mobile terminal may receive the SGDD in either of the following modes:

Mode 1: In the case that the address of the SG is the broadcast address of the SG

The SG server broadcasts the corresponding SGDD to different areas in the service scope.

According to the address of the SG, the mobile terminal receives the SGDD broadcast by the SG server.

Mode 2: In the case that the address of the SG is the interactive address of the SG

According to the address of the SG, the mobile terminal requests the SGDD from the SG server.

The mobile terminal receives the SGDD delivered by the SG server and corresponding to the address of the SG.

Step 403: The mobile terminal matches the information about the current area of the mobile terminal with the SG coverage area information in the SGDD, and filters out the identifier of the SG suitable for the current scenario.

Step 404: The mobile terminal requests the corresponding SG from the SG server according to the filtering result.

Step 405: The mobile terminal receives the SG delivered by the SG server.

For example, if a unidirectional network is in use, the mobile terminal may receive the corresponding SG in an SG delivery session according to the description in the SGDD.

The following table shows the change of the data structure in the SGDD of the SG in this embodiment:

| Name | Type | Category | Cardinality | Description | Data Type |
|---|---|---|---|---|---|
| ServiceGui deDelivery Descriptor | E | | | The SGDD is a descriptor that describes the information about the SG access. | |
| id | A | NM/TM | 0..1 | Identifier of the SGDD. | anyURI |
| version | A | NM/TM | 0..1 | Version of the SGDD. | unsignedI nt |
| Notification Reception | E1 | NM/TM | 0..1 | Receiving address of the message. | |
| BSMList | E1 | NM/TM | 0..1 | List of identifiers of the operation management system, for use in subsequent groups. | |
| AreaList | E1 | NM/TM | 0..1 | List of coverage areas. | |
| TargetArea | E2 | NO/TM | 0..N | Coverage area. | |
| id | A | NM/TM | 1 | ID of a coverage area. | anyURI |
| shape | E3 | NO/TM | 0..1 | Shape of a coverage area. | |
| cc | E3 | NO/TM | 0..1 | Country code of a coverage area. | unsigned Short |
| name_area | E3 | NO/TM | 0..N | Name of a coverage area | string |
| ZipCode | E3 | NO/TM | 0..1 | Zip code of a coverage area. | string |
| CellTarget Area | E3 | NO/TM | 0..1 | This element is used if the coverage area uses a cell identifier. | |
| type | A | NM/TM | 1 | Cell type, including the information about the broadcast cell and the interactive cell. | unsigned Byte |
| hor_acc | E3 | NO/TM | 0..N | Horizontal precision. | string |
| DescriptorE ntry | E1 | NM/TM | 1..N | SG information entry and description information, including the grouping keyword of the SG information, entry address of SG information, encapsulation of SG information and internal fragment information. | |
| GroupingCr iteria | E2 | NM/TM | 0..1 | Grouping keyword, for example, an identifier indicating that the SG information belongs to a time segment, service or style. In this embodiment, coverage area is added as a keyword. | |
| TimeGroup ingCriteria | E3 | NM/TM | 0..1 | Time keyword, identifying the time segment covered by the SG information. | |
| GenreGrou pingCriteria | E3 | NM/TM | 0..1 | Style keyword, identifying the style of the SG information. | string |
| BSMSelect or | E3 | NM/TM | 0..N | Operator keyword, identifying the operator corresponding to the SG information. | |
| idRef | A | NM/TM | 1 | Using the ID in the BSMLIST as the value of the keyword. | anyURI |
| ServiceCrit eria | E3 | NM/TM | 0..1 | Service keyword, identifying the service to which the SG information belongs. | anyURI |
| TargetArea Selector | E3 | NM/TM | 0..1 | Keyword of the SG coverage information. | |
| idRef | A | NM/TM | 1 | Using the ID in the AreaList as the value of the keyword. | |
| Transport | E2 | NM/TM | 0..1 | Description about the mode of transmitting SG information. | |
| Alternative AccessURL | E2 | NM/TM | 0..N | Acquiring the address of the SG information interactively. | anyURI |
| ServiceGui deDelivery Unit | E2 | NM/TM | 1..N | Description about the SG information delivery unit and the fragment information in it. | |
| Fragment | E3 | NM/TM | 1..N | Fragment information. | |
| GroupingCr iteria | E4 | NM/TM | 0..1 | Grouping keyword of the fragment information. | |
| TimeGroup ingCriteria | E5 | NM/TM | 0..1 | Time keyword. | |
| BSMSelect or | E5 | NM/TM | 0..N | Operator keyword, identifying the operator corresponding to the SG information. | |
| idRef | A | NM/TM | 1 | Using the ID in the BSMLIST as the value of the keyword. | anyURI |
| TargetArea Selector | E3 | NM/TM | 0..1 | Keyword of the SG coverage information. | |
| idRef | A | NM/TM | 1 | Using the ID in the AreaList as the value of the keyword. | |

In the OMA Broadcast (BCAST) group standard, the mobile terminal receives the SGDD first, and then acquires the specific description information according to the SG description in the SGDD. In this embodiment, the description about the coverage area of the SG is added to the SGDD so that the terminal can filter SGs quickly according to the current information.

Moreover, in the DVB-CBMS standard, when the SG is acquired through the interactive channel, a DeliveryList needs to be acquired first. The DeliveryList is equivalent to the SGDD in the OMA BCAST. Therefore, the SG coverage area information may be specified in the DeliveryList of the SG. The basic process is similar and not repeated further. The data structure in the DeliveryList is modified as follows:

```
     <complexType name="DeliveryList">
                          <sequence>
                              <element name="SubList" type="SubListType"
 maxOccurs="unbounded"/>
                              <element name=" AreaList " type=" AreaListType"
 maxOccurs="unbounded"/>
                         </sequence>
                         <attribute name="lastupdated" type="unsignedInt"
 use="required"/>
                         <attribute name="expirationDate" type="unsignedInt"
 use="optional"/>
                         <attribute name="expirationWindow" type="unsignedInt"
 use="optional"/>
           </complexType>
          <complexType name"SubListType">
                     <sequence>
                         <element name="IADeliveryChannel"
 type="IADeliveryChannelType" minOccurs="0"/>
                         <element name="BCDeliveryChannel"
 type="BCDeliveryChanelType" minOccurs="0"/>
                     </sequence>
                     <attribute name="subListID" type="unsignedInt" use="required"/>
                     <attribute name="priority" type="unsignedInt" use="optional"/>
                      <attribute name="lastupdatedSL" type="unsignedInt"
 use="required"/>
           <attribute name=" TargetArea" type="anyURI" use="optional"/>
                      <attribute name="source" type="anyURI" use="optional"/>
           </complexType>
```

For the data structure of the AreaList, the AreaList element in the SGDD serves as a reference.

Further, to facilitate the mobile terminal to acquire the SG in the DVB-CBMS, the information related to the SG may be transmitted over multiple transmission channels. In this scenario, an SG division descriptor, namely, SG division declaration information, is required for describing channels for transmitting each part of the SG and the principle of dividing the SG. A possible principle is that the SG is divided according to the coverage area of the SG. That is, the mode of dividing the coverage area and the relevant information are added in the SG division declaration information.

The following table shows a structure of the existing SG division declaration information:

| Parameter | Meaning |
|---|---|
| n_0_IPStreams | Quantity of IP streams. |
| IPStreamID | Identifier of an IP stream. |
| ESGSourceAddress | Address of the Electronic Service Guide (ESG) transmitted after division. |
| start_field_value | The start value of the index value corresponding to the foregoing address. This value identifies the principle of dividing the SG. For example, the SG is divided by time or according to the service. This value is similar to the grouping keyword in the data structure in the SGDD. Currently, the DVB-CBMS defines only two division modes: time-based division and service-based division. This embodiment adds an area-based division mode. As for the area information, the information listed in the data structure in the SGDD serves as a reference. It is recommended to use cellID to identify the area information. |
| End_field _value | End value of the index value corresponding to the foregoing address. |

In this embodiment, the SG delivery description information may include the SG coverage area information. After acquiring the SG delivery description information, the terminal acquires the SG delivered by the SG server and corresponding to the current area of the terminal according to the SG coverage area information, thus saving network transmission bandwidth massively. Moreover, the mobile terminal does not need to filter the SG fragments. Thus the mobile terminal is simplified, and the mobile video service is easier to promote and apply.

FIG. 5 is a flowchart illustrating an embodiment of another SG acquiring method of the present invention. As shown in FIG. 5, the method includes the following steps:

Step 501: The mobile terminal receives the SG that is integrated by the SG server according to the coverage area, where the SG includes coverage area information fragments pointing to the relevant service or content information element.

The following table shows the composition of a coverage area information fragment:

| Name | Type | Category | Cardinality | Description | Data Type |
|---|---|---|---|---|---|
| AreaFragme nt | E | | | Description fragment of location coverage area information. | |
| id | A | NM/TM | 0..1 | Identifier of the fragment. | anyURI |
| version | A | NM/TM | 0..1 | Version of the fragment. | unsignedI nt |
| AreaList | E1 | NM/TM | 0..1 | List of coverage areas. | |
| TargetArea | E2 | NO/TM | 0..N | Coverage area. | |
| id | A | NM/TM | 1 | ID of a coverage area. | anyURI |
| shape | E3 | NO/TM | 0..1 | Shape of a coverage area. | |
| cc | E3 | NO/TM | 0..1 | Country code of a coverage area. | unsignedS hort |
| name_area | E3 | NO/TM | 0..N | Name of a coverage area. | string |
| ZipCode | E3 | NO/TM | 0..1 | Zip code of a coverage area. | string |
| CellTargetAr ea | E3 | NO/TM | 0..1 | This element is used if the coverage area uses a cell identifier. | |
| type | A | NM/TM | 1 | Cell type, including the type of the broadcast cell and the interactive cell. | unsignedB yte |
| hor_acc | E3 | NO/TM | 0..N | Horizontal precision. | String |
| ServiceRef | A | NO/TM | 0..N | Pointing to the service fragment, and identifying the coverage area of the service as described. | anyURI |
| ContentRef | A | NO/TM | 0..N | Pointing to the content fragment, and identifying the coverage area of the content as described above. | anyURI |
| ScheduleRef | A | NO/TM | 0..N | Pointing to the time event fragment, and identifying the coverage area of the event as described above. | anyURI |

Step 502: The mobile terminal acquires the corresponding SG according to the information about the current area of the mobile terminal and the coverage area information.

The SG delivered by the SG server in this embodiment carries more detailed description information about the service or content coverage area, namely, coverage area information. The SG server carries the coverage area information through an independent fragment of the SG, namely, a coverage area information fragment. Therefore, the services or contents in the same coverage area share the coverage area information, thus reducing repetition of the coverage area information in the service/content fragments.

The coverage area information fragment in this embodiment may integrate the area description information scattered in the service or content fragments in the prior art. Therefore, the service or content fragments with the same coverage area information share the area description information, thus reducing the amount of redundant information in the SG and reducing consumption of the network bandwidth.

In other embodiments, the service fragment or content fragment in the prior art may be modified, and an ID pointing to the TargetArea may be added to such fragments. The service or content coverage area is described through the ID, which is not detailed further.

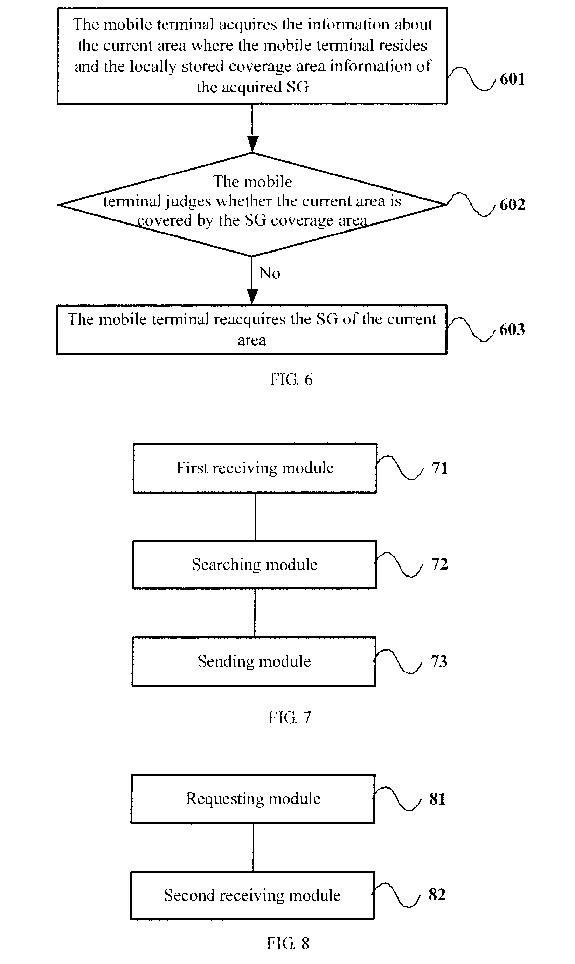

FIG. 6 is a flowchart illustrating an embodiment of an SG reacquiring method of the present invention. As shown in FIG. 6, the method includes the following steps:

Step 601: The mobile terminal acquires the information about the current area of the mobile terminal and the locally stored coverage area information of the acquired SG.

Step 602: The mobile terminal judges whether the current area of the mobile terminal is covered by the coverage area of the SG according to the information about the current area of the mobile terminal and the coverage area information of the acquired SG. If the current area of the mobile terminal is not covered, the process proceeds to step 603.

Step 603: The mobile terminal reacquires the SG of the current area of the mobile terminal.

It is understandable that the mobile terminal may acquire the SG in a mode based on the prior art, or according to the embodiments of the present invention shown in FIG. 1, FIG. 2, FIG. 3 or FIG. 4.

Compared with the prior art, this embodiment provides a method for a mobile terminal to reacquire an SG. This method checks the correspondence between the current area of the mobile terminal and the coverage area of the stored SG after detecting change of the current area of the mobile terminal, thus controlling whether to reacquire the SG. By contrast, in the prior art, if the current area of the mobile terminal is inconsistent with the coverage area of the stored SG, for example, when the mobile terminal is handed over between cells or after the mobile terminal is powered off, the mobile terminal is unable to access the video service of the network when the mobile terminal is powered on again in other areas. Compared with the prior art, the embodiments of the present invention improve the service experience of the user greatly and facilitate promotion of the mobile video service.

FIG. 7 shows a structure of an SG server in an embodiment of the present invention. As shown in FIG. 7, the SG server may include: a first receiving module 71, adapted to receive an SG request that carries information about the current area of the mobile terminal; a first searching module 72, adapted to search out the SG that matches the information about the current area of the mobile terminal according to the information about the current area of the mobile terminal; and a first sending module 73, adapted to send the SG.

The SG server in this embodiment may perform the process in any of these embodiments: the first embodiment of an SG acquiring method of the present invention shown in FIG 1, the second embodiment of an SG acquiring method of the present invention shown in FIG2, and the third embodiment of an SG acquiring method of the present invention.

FIG. 8 shows a structure of a terminal device in an embodiment of the present invention. As shown in FIG. 8, the terminal device includes: a requesting module 81, adapted to send the SG request that carries information about the current area of the mobile terminal; and a second receiving module 82, adapted to receive the SG corresponding to the current area of the mobile terminal.

The terminal device in this embodiment may perform the process in either of these embodiments: the first embodiment of an SG acquiring method of the present invention shown in FIG. 1 and the second embodiment of an SG acquiring method of the present invention shown in FIG. 2.

Further, the requesting module in this embodiment may include: a first receiving module, adapted to receive the SG bootstrap message that carries the address of the SG server; and a first requesting unit, adapted to send an SG request that carries the information about the current area of the mobile terminal according to the address of the SG server.

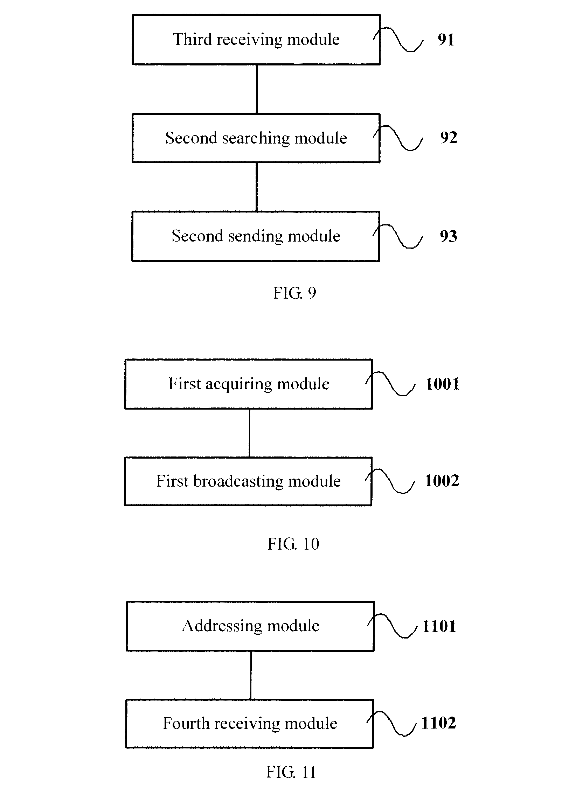

FIG. 9 shows a structure of a bootstrap server in an embodiment of the present invention. As shown in FIG. 9, the bootstrap server may include: a third receiving module 91, adapted to receive an SG address request that carries information about the current area of the mobile terminal; a second searching module 92, adapted to search out the SG address that matches the information about the current area of the mobile terminal according to the information about the current area of the mobile terminal; and a second sending module 93, adapted to send the SG address.

The bootstrap server in this embodiment may perform the process in either of these embodiments: the first embodiment of SG acquiring method of the present invention shown in FIG. 3 and the second embodiment of SG acquiring method of the present invention shown in FIG. 4.

FIG. 10 shows a structure of SG server in another embodiment of the present invention. As shown in FIG. 10, the SG server may include: a first acquiring module 1001, adapted to acquire the SG corresponding to each different area in the service scope; and a first broadcasting module 1002, adapted to broadcast the corresponding SG to each different area.

The SG server in this embodiment may perform the process in either of these embodiments: the first embodiment of SG acquiring method of the present invention shown in FIG. 3 and the second embodiment of SG acquiring method of the present invention shown in FIG. 4.

FIG. 11 shows a structure of terminal device in another embodiment of the present invention. As shown in FIG. 11, the terminal device may include: an addressing module 1101, adapted to acquire the address of the SG corresponding to the current areaof the mobile terminal according to the information about the current area of the mobile terminal; and a fourth receiving module 1102, adapted to receive the SG according to the address of the SG.

The terminal device in this embodiment may perform the process in either of these embodiments: the first embodiment of SG acquiring method of the present invention shown in FIG. 3 and the second embodiment of SG acquiring method of the present invention shown in FIG. 4.

Further, the addressing module in this embodiment may include: a second receiving module, adapted to receive the SG bootstrap message broadcast by the bootstrap server, where the SG bootstrap message carries the correspondence between the SG coverage area information and the SG address; a first matching unit, adapted to acquire the address of the SG that matches the information about the current area of the mobile terminal in the correspondence according to the information about the current area of the mobile terminal.

Alternatively, the addressing module in this embodiment may further include: a second requesting unit, adapted to request the SG bootstrap message from the bootstrap server; a third receiving unit, adapted to receive the SG bootstrap message delivered by the bootstrap server, where the SG bootstrap message carries the correspondence between the area information and the address of the SG; and a second matching unit, adapted to: acquire the address of the SG that matches the information about the current area of the mobile terminal in the correspondence according to the information about the current area of the mobile terminal.

Alternatively, the addressing module in this embodiment may also include: a third requesting unit, adapted to request the SG bootstrap message from the bootstrap server, where the request carries the information about the current area of the mobile terminal; a fourth receiving unit, adapted to receive the SG bootstrap message delivered by the bootstrap server, where the SG bootstrap message carries the address of the SG corresponding to the current area of the mobile terminal.

Further, the fourth receiving module in this embodiment may include: a fifth receiving unit, adapted to receive the SG delivery description information according to the address of the SG, where the delivery description information includes the SG coverage area information; a third matching unit, adapted to: match the information about the current area of the mobile terminal with the SG coverage area information in the SG delivery description information, and acquire the identifier of the SG corresponding to the current area of the mobile terminal; a sixth receiving unit, adapted to acquire the corresponding SG according to the identifier of the SG.

In this embodiment, the SG delivery description information received by the fifth receiving unit may include the SG coverage area information; the sixth receiving unit acquires the corresponding SG delivered by the SG server according to the SG identifier that is matched out by the third matching unit and corresponds to the current area of the mobile terminal, thus saving network transmission bandwidth massively. Moreover, the mobile terminal does not need to filter the SG fragments. Thus the mobile terminal is simplified, and the mobile video service is easier to promote and apply.

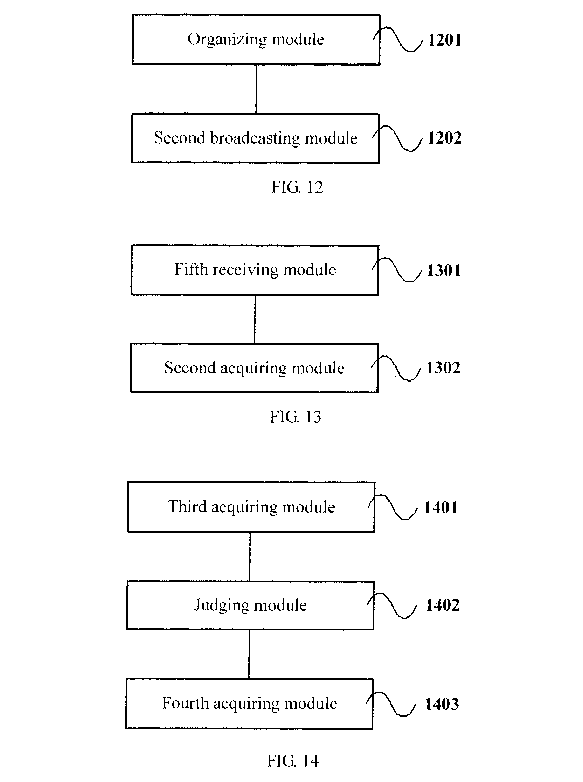

FIG. 12 shows a structure of SG server in another embodiment of the present invention. As shown in FIG. 12, the SG server may include: an organizing module 1201, adapted to: integrate the SG according to the coverage area, where the SG includes coverage area information fragments pointing to the relevant service or content information element; and a second broadcasting module 1202, adapted to broadcast the SG to each different area.

The SG server in this embodiment may perform the process in the embodiment of another SG acquiring method of the present invention.

The SG delivered by the second broadcasting module in the SG server in this embodiment carries more detailed description information about the service/content coverage area, namely, coverage area information. The organizing module carries the coverage area information through an independent fragment of the SG, namely, a coverage area information fragment. Therefore, the services/contents in the same coverage area share the coverage area information, thus reducing repetition of the coverage area information in the service/content fragments.

The coverage area information fragment in this embodiment may integrate the area description information scattered in the service/content fragments in the prior art. Therefore, the service/content fragments with the same coverage area information share the area description information, thus reducing the amount of redundant information in the SG and reducing consumption of the network bandwidth.

FIG. 13 shows a structure of another terminal device in an embodiment of the present invention. As shown in FIG. 13, the terminal device may include: a fifth receiving module 1301, adapted to receive the SG that is integrated according to the coverage area, where the SG includes coverage area information fragments pointing to the relevant service or content information element; and a second acquiring module 1302, adapted to acquire the corresponding SG according to the information about the current area of the mobile terminal and the coverage area information fragments.

The SG server in this embodiment may perform the process in the embodiment of SG acquiring method of the present invention shown in FIG. 5.

FIG. 14 shows a structure of another terminal device in an embodiment of the present invention. As shown in FIG. 14, the terminal device may include: a third acquiring module 1401, adapted to acquire the information about the current area of the mobile terminal and the coverage area information of the acquired SG; a judging module 1402, adapted to: judge whether the current area of the mobile terminal is covered by the coverage area of the SG according to the information about the current area of the mobile terminal and the coverage area information of the acquired SG; and a fourth acquiring module 1403, adapted to reacquire the SG of the current area of the mobile terminal if the judging module 1402 determines that the current area of the mobile terminal is not covered by the coverage area of the SG.

The terminal device in this embodiment may perform the process in the embodiment of an SG reacquiring method of the present invention shown in FIG. 6.

It is understandable to those skilled in the art that all or part of the steps of the preceding embodiments can be implemented by hardware instructed by a program. The program may be stored in a computer-readable storage medium. When being executed, the program performs the steps of the foregoing method embodiments. The storage medium may be any medium capable of storing program codes, for example, a Read-Only Memory (ROM), a Random Access Memory (RAM), a magnetic disk, and a compact disk.

Although the invention is described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for acquiring, Service Guide, SG, comprising:
sending an SG request that carries information about an area where a mobile terminal currently resides; and
receiving an SG corresponding to the current area of the mobile terminal.

2. The SG acquiring method of claim 1, wherein before sending the SG request that carries the information about the area where a mobile terminal currently resides, the method further comprises:
receiving an SG bootstrap message that carries an address of an SG server.

3. The SG acquiring method of claim 2, wherein the sending of the SG request that carries the information about the area where a mobile terminal currently resides comprises:
sending the SG request that carries the information about the current area of the mobile terminal according to the address of the SG server.

4. The method for acquiring SG of claim 2, wherein the receiving of the SG bootstrap message comprises:
receiving the SG bootstrap message broadcast by a bootstrap server.

5. The method for acquiring SG of claim 2, wherein the receiving of the SG bootstrap message comprises:
requesting the SG bootstrap message from the bootstrap server; and
receiving the SG bootstrap message sent by the bootstrap server.

6. A method for acquiring Service Guide, SG, comprising:
acquiring an address of an SG corresponding to an area where a mobile terminal currently resides according to information about the current area of the mobile terminal; and
receiving the SG according to the address of the SG.

7. The SG acquiring method of claim 6, wherein the acquiring of the address of the SG corresponding to the area where a mobile terminal currently resides according to the information about the current area of the mobile terminal comprises:
interacting with a bootstrap server to acquire the address of the SG corresponding to the current area of the mobile terminal according to the information about the current area of the mobile terminal.

8. The method for acquiring SG of claim 7, wherein the receiving of the SG according to the address of the SG comprises:
broadcasting, by an SG server, the corresponding SG to different areas in a service scope; and
receiving the SG broadcast by the SG server according to the address of the SG.

9. The method for acquiring SG of claim 7, wherein the receiving of the SG according to the address of the SG comprises:
requesting the SG from the SG server according to the address of the SG; and
receiving the SG that is delivered by the SG server and corresponds to the address of the SG.

10. The method for acquiring SG of claim 7, wherein the interacting with the bootstrap server to acquire the address of the SG corresponding to the area where a mobile terminal currently resides according to the information about the current area of the mobile terminal comprises:
receiving an SG bootstrap message broadcast by the bootstrap server, wherein the SG bootstrap message carries a correspondence between area information and the address of the SG; and
acquiring the address of the SG that matches the information about the current area of the mobile terminal in the correspondence according to the information about the current area of the mobile terminal.

11. The method for acquiring SG of claim 7, wherein the interacting with the bootstrap server to acquire the address of the SG corresponding to the area where a mobile terminal currently resides according to the information about the current area of the mobile terminal comprises:
requesting the SG bootstrap message from the bootstrap server;
receiving an SG bootstrap message delivered by the bootstrap server, wherein the SG bootstrap message carries a correspondence between area information and the address of the SG; and
acquiring the address of the SG that matches the information about the current area in the correspondence according to the information about the current area.

12. The method for acquiring SG of claim 7, wherein the interacting with the bootstrap server to acquire the address of the SG corresponding to the area where a mobile terminal currently resides according to the information about the current area of the mobile terminal comprises:
requesting an SG bootstrap message from the bootstrap server, wherein the request carries the information about the current area of the mobile terminal; and
receiving the SG bootstrap message delivered by the bootstrap server, wherein the SG bootstrap message carries the address of the SG corresponding to the current area of the mobile terminal.

13. The method for acquiring SG of claim 6, wherein the receiving of the SG according to the address of the SG comprises:
receiving SG delivery description information according to the address of the SG, wherein the SG delivery description information comprises SG coverage area information;
matching the information about the current area of the mobile terminal with the SG coverage area information in the delivery description information, and acquiring an identifier of the SG corresponding to the current area of the mobile terminal; and
acquiring the corresponding SG according to the identifier of the SG.

14. The method for acquiring SG of claim 13, wherein the SG delivery description information comprises:
Service Guide Delivery Descriptor, SGDD, SG division descriptor, or SG delivery list/sublist.

15. A method for acquiring Service Guide, SG, comprising:
receiving an SG that is integrated according to a coverage area, wherein the SG comprises coverage area information fragments pointing to a relevant service/content information element; and
acquiring the corresponding SG according to information about a current area and the coverage area information fragments.

16. A method for reacquiring Service Guide, SG, comprising:
determining that a current area is not covered by a coverage area of an SG according to information about the current area and coverage area information of an acquired SG; and
reacquiring the SG of the current area.

17. A Service Guide, SG, server, comprising:
a first receiving module, adapted to receive an SG request that carries information about an area where a mobile terminal currently resides;
a first searching module, adapted to: search out an SG that matches the information about the current area of the mobile terminal according to the information about the current area of the mobile terminal; and
a first sending module, adapted to send the SG.

18. A mobile terminal, comprising:
a requesting module, adapted to send a Service Guide, SG, request that carries information about an area where the mobile terminal currently resides; and
a second receiving module, adapted to receive an SG corresponding to the current area of the mobile terminal.

19. The mobile terminal of claim 18, wherein the requesting module comprises:
a first receiving unit, adapted to receive an SG bootstrap message that carries an address of an SG server; and
a first requesting unit, adapted to send the SG request that carries the information about the current area of the mobile terminal according to the address of the SG server.

20. A bootstrap server, comprising:
a third receiving module, adapted to receive a Service Guide, SG, address request that carries information about an area where a mobile terminal currently resides;
a second searching module, adapted to: search out an SG address that matches the information about the current area of the mobile terminal according to the information about the current area of the mobile terminal; and
a second sending module, adapted to send the SG address.

21. A Service Guide, SG, server, comprising:
a first acquiring module, adapted to acquire an SG corresponding to each different area in a service scope; and
a first broadcasting module, adapted to broadcast the corresponding SG to each different area.

22. A mobile terminal, comprising:
an addressing module, adapted to acquire an address of a Service Guide, SG, corresponding to an area where the mobile terminal currently resides according to information about the current area of the mobile terminal; and
a fourth receiving module, adapted to receive the SG according to the address of the SG.

23. The mobile terminal of claim 22, wherein the addressing module comprises:
a second receiving unit, adapted to receive an SG bootstrap message broadcast by a bootstrap server, wherein the SG bootstrap message carries a correspondence between area information and the address of the SG; and
a first matching unit, adapted to: acquire the address of the SG that matches the information about the current area of the mobile terminal in the correspondence according to the information about the current area of the mobile terminal.

24. The mobile terminal of claim 22, wherein the addressing module comprises:
a second requesting unit, adapted to request an SG bootstrap message from a bootstrap server;
a third receiving unit, adapted to receive the SG bootstrap message delivered by the bootstrap server, wherein the SG bootstrap message carries a correspondence between area information and the address of the SG; and
a second matching unit, adapted to: acquire the address of the SG that matches the information about the current area of the mobile terminal in the correspondence according to the information about the current area of the mobile terminal.

25. The mobile terminal of claim 22, wherein the addressing module comprises:
a third requesting unit, adapted to request an SG bootstrap message from a bootstrap server, wherein the request carries the information about the current area of the mobile terminal; and
a fourth receiving unit, adapted to receive the SG bootstrap message delivered by the bootstrap server, wherein the SG bootstrap message carries the address of the SG corresponding to the current area of the mobile terminal.

26. The mobile terminal of claim 22, wherein the fourth receiving module comprises:
a fifth receiving unit, adapted to receive SG delivery description information according to the address of the SG, wherein the SG delivery description information comprises SG coverage area information;
a third matching unit, adapted to: match the information about the current area of the mobile terminal with the SG coverage area information in the SG delivery description information, and acquire an identifier of the SG corresponding to the current area of the mobile terminal; and
a sixth receiving unit, adapted to acquire the corresponding SG according to the identifier of the SG.

27. A Service Guide, SG, server, comprising:
an organizing module, adapted to: integrate an SG according to a coverage area, wherein the SG comprises coverage area information fragments pointing to a relevant service/content information element; and
a second broadcasting module, adapted to broadcast the SG to each different area.

28. A mobile terminal, comprising:
a fifth receiving module, adapted to receive a Service Guide, SG, which is integrated according to a coverage area, wherein the SG comprises coverage area information fragments pointing to a relevant service/content information element; and
a second acquiring module, adapted to acquire the corresponding SG according to information about a current area and the coverage area information fragments.

29. A mobile terminal, comprising:
a third acquiring module, adapted to acquire information about an area where the mobile terminal currently resides and coverage area information of an acquired Service Guide, SG;
a judging module, adapted to: judge whether the current area of the mobile terminal is covered by a coverage area of the SG according to the information about the current area of the mobile terminal and the coverage area information of the acquired SG; and
a fourth acquiring module, adapted to reacquire the SG corresponding to the current area of the mobile terminal if the judging module determines that the current area of the mobile terminal is not covered by the coverage area of the SG.
